# EUROPÄISCHE PATENTSCHRIFT

(11) **EP 1 452 843 B1**
(45) Veröffentlichungstag und Bekanntmachung des Hinweises auf die Patenterteilung: **14.09.2016**
(21) Anmeldenummer: 03028558.9
(22) Anmeldetag: 11.12.2003
(51) Int. Cl.: G01K 5/00, G01K 15/00, H01H 37/76

(54) **Kalibriervorrichtung sowie Ofen**
Calibrating device and oven
Dispositif d'étalonnage et four

(30) Priorität: 25.02.2003 DE 10307933
(43) Veröffentlichungstag der Anmeldung: 01.09.2004
(73) Patentinhaber: Ivoclar Vivadent AG, 9494 Schaan (LI)
(72) Erfinder: Feichtinger, Heinrich, Prof.Dr.Ing., 8132 Hinteregg (CH); Jussel, Rudolf, 6806 Feldkirch-Tosters (AT)
(74) Vertreter: Baronetzky, Klaus

(56) Entgegenhaltungen:
- WO-A-91/16585
- DE-A- 4 206 540
- DE-A- 10 008 603
- US-A- 2 524 886
- US-A- 3 264 448
- US-A- 3 333 086

## Beschreibung

Die vorliegende Erfindung betrifft ein Kalibriervorrichtung zur Temperatureichung von Öfen, gemäß dem Oberbegriff von Anspruch 1, wie sie vorzugsweise im Dentalbereich zum Einsatz kommen, sowie einen Ofen gemäß dem Oberbegriff von Anspruch 23.

Für die Herstellung von Dentalkeramiken sind regelmäßig sogenannte Muffelöfen erforderlich. Bei derartigen Öfen wird eine schwenkbare Ofenhaube abgesenkt, um das Brenngut gleichmäßig zu erwärmen. Durch Anheben der Haube ist das Brenngut recht rasch frei zugänglich, so dass sich diese Lösung bewährt hat.

Die Qualität des erzeugten Brennguts, wie sie beispielsweise eine Dentalkeramik darstellt, hängt stark davon ab, dass eine vorgeschriebene Brennkurve exakt eingehalten wird. Hierzu weist der Ofen regelmäßig einen Temperatursensor auf, so dass eine Temperaturregelung möglich ist.

Allerdings ist die Qualität der Temperaturnachführung natürlich nur so gut wie die Genauigkeit des Temperaturfühlers. Daher müssen derartige Muffelöfen regelmäßig nachjustiert und kalibriert werden.

Über den Dentalbereich hinausgehend ist es bei zahlreichen verschiedenen Öfen erforderlich, regelmäßig für eine genaue Kalibrierung zu sorgen.

Es sind zahlreiche verschiedene Lösungen bekannt geworden, mit einfachen Mitteln eine Kalibrierung zu bewerkstellen. Beispielsweise ist aus der DE-OS 42 06 540 ein Ofen bekannt geworden, bei dem zwei Thermoelemente eingesetzt werden sollen, um die Kalibrierung zu erreichen. Derartige Thermoelemente sind allerdings nicht genau.

Ferner ist es auch aus der DE-OS 100 08 603 bekannt geworden, die Schmelzpunkte von Gold- und Silberkalibrierdrähten als Kalibrierpunkte zu verwenden. Bei dieser Lösung ist ein Schmelzdraht vorgesehen, dessen Schmelzen einen Stromkreis unterbricht, so dass die Schmelztemperatur durch einen Stromkreis, in dem der Draht als Kalibrierelement einen Teil darstellt, exakt erfasst werden kann.

Ferner offenbart die Druckschrift US 2,524,886 einen Thermostaten für einen Ofen für Piezokristalle, mit einer geschlossenen Druckkammer die eine Schmelzmischung umschließt, wobei die Druckkammer eine Membran besitzt, um Volumenänderungen der Schmelzmischung, insbesondere beim Phasenübergang fest - flüssig, zuzulassen. Die Bewegungen der Membran kontrollieren einen Betätigungsstift, der seinerseits einen Relaisschalter bedient, indem er eine vorgespannte Federkontaktzunge gegen die elastische Spannung betätigt und so die Ofenheizung schaltet.

Die Druckschrift US 3,264,448 bezieht sich ebenfalls auf einen Thermostaten für einen Ofen, mit einer geschlossenen Druckkammer, die eine Schmelzmischung umschließt, wobei die Druckkammer eine Membran besitzt, um temperaturbedingte Volumenänderungen der Schmelzmischung, insbesondere beim Phasenübergang fest - flüssig, zuzulassen. Die Bewegungen der Membran werden hier jedoch auf einen Kontaktstift übertragen, der seinerseits bei Expansion der Schmelzmischung mit einem Gegenkontakt elektrischen Kontakt herstellt und auf diese Weise die Ofenheizung schaltet.

Auch die Druckschrift US 3,333,086 beschreibt einen Thermostaten mit einer geschlossenen Druckkammer, die eine Schmelzmischung umschließt, wobei die Druckkammer eine Membran besitzt, um temperaturbedingte Volumenänderungen der Schmelzmischung, insbesondere beim Phasenübergang fest - flüssig, zuzulassen. Die Bewegungen der Membran werden hier jedoch entweder über einen Betätigungsstift auf einen Dehnungsmessstreifen übertragen, oder mittels des Betätigungsstiftes auf einen Hebelmechanismus übertragen, der wiederum ein Potentiometer betätigt, wobei die Widerstandsänderungen ausgewertet werden.

Es sind verschiedene andere Lösungen bekannt geworden, bei denen mit mindestens zwei Temperaturpunkten eine Kalibrierung vorgenommen werden soll. Die vorgeschlagenen Lösungen sind jedoch vergleichsweise aufwändig und dennoch nicht besonders genau, gerade wenn Schmelzdrähte als Öffnerkontakte verwendet werden, oder wenn ein schmelzendes Metall einen Schließkontakt betätigen soll. In beiden Fällen ist nämlich die Kohäsion und Adhesion des geschmolzenen Metalls zu berücksichtigen, welche sowohl den Öffnungs- wie auch den Schließvorgang ungünstig beeinflussen kann. Es ist kein Zufall, dass die klassischen Werkstoff zur Temperaturreglung Edelmetalle, wie Gold und Silber, sind. Abgesehen von ihrem exakt definierten Schmelzpunkt haben diese Metalle, bedingt insbesondere durch ihren chemischen edlen Charakter, keine Tendenz zur Ausbildung von chemischen Verbindungen, insbesondere von Oxiden, mit der umgebenden Gesamtatmosphäre.

Im Gegensatz dazu bilden normale Metalle bei den erhöhten Temperaturen der Temperaturkalibrierung Oberflächenoxide aus, deren Schmelzpunkt meist weit oberhalb des Schmelzpunktes des Metalls liegt, so dass das Metall sich praktisch in einer mechanisch erheblich festen und elektrisch isolierenden Umhüllung befindet, welche die Kontaktaufnahme oder den Kontaktverlust erheblich behindert.

Diese Tatsache ist umso nachteiliger, da die edlen Metalle verhältnismäßig hohe Schmelzpunkte aufweisen, während eine Kalibrierung bei tieferen Temperaturen, z.B. im Bereich von 600°C, auf die Verwendung von unedleren Metallen, wie z.B. Aluminium angewiesen ist. Aluminium wäre grundsätzlich für eine exakte Temperaturkalibration geeignet, denn der Schmelzpunkt von Reinaluminium ist auf drei stellen hinter dem Komma definiert. Jedoch ist Aluminium ein hochreaktives Metall, dessen positive Gebrauchseigenschaften darauf beruhen, dass es bereits bei Raumtemperatur eine Schutzschicht aus Aluminiumoxid bildet. Während Reinalumiium einen Schmelzpunkt von 660°C besitzt, liegt der Schmelzpunkt von Aluminiumoxid oberhalb von 2000°C. Die mechanische Festigkeit dieser dünnen Oxidschicht ist bei 660°C so hoch, dass das geschmolzene Aluminium "wie in einem Sack" gefangen ist und deshalb nicht fähig ist, einen Kontakt ähnlich wie die Edelmetalle, nur unter dem Einfluss der Schwerkraft, in einfacher Weise zu öffnen oder zu schließen.

Im Hinblick auf diese bestehenden Probleme wäre es wünschenswert, ein preisgünstiges Kalibrierelement bereitzustellen, welches die obigen Nachteile vermeiden.

Daher liegt der Erfindung die Aufgabe zu Grunde, ein Kalibriervorrichtung gemäß dem Oberbegriff von Anspruch 1 zu schaffen, die eine exakte Temperaturkalibrierung auch mit nichtedlen Metallen, insbesondere bei tieferen Temperaturen, gestattet.

Diese Aufgabe wird erfindungsgemäß durch Anspruch 1 gelöst. Vorteilhafte Weiterbildungen ergeben sich aus den Unteransprüchen.

Die erfindungsgemäße Lösung weicht von dem bislang realisierten Grundkonzept ab, bei dem die beim Schmelzen einsetzende Beweglichkeit des Kalibriermetalls nur unter dem Einfluss der Schwerkraft zur Öffnung oder Schließung eines Schaltkreises führt.

Die erfindungsgemäße Lösung benützt die Volumenänderung, welche bei der Flüssig-Fest-Phasenänderung von Metallen auftritt, als Mittel zur Öffnung oder Schließung eines Schaltkontaktes eines Stromkreises. Die Kräfte, welche bei einer solchen Volumsänderung auftreten, sind wesentlich größer als die Schwerkraft. Wenn man sich vergegenwärtigt, dass - allerdings anormal reagierendes - gefrierendes Wasser ohne Weiteres in der Lage ist, eine dickwandige Glasflasche zu sprengen, ist einfach einzusehen, dass schmelzendes Aluminium ohne Weiteres in der Lage ist, seine oberflächliche dünnwandige Oxidschicht zum Bersten zu bringen.

In diesem Zusammenhang ist es erfindungsgemäß besonders günstig, dass die Kontaktgabe an dem Schaltkontakt eine Bewegung erfordert. Während der Bewegung selbst ist die Neigung frischer Aluminiumoberflächen, neue Oxidschichten an der Grenzfläche zur Luft zur bilden, am geringsten, so dass eine sichere Kontaktgabe gewährleistet ist.

Im Gegensatz zur stetigen, jedoch schwachen Volumenvergrößerung, welche über den gesamten Temperaturbereich erfolgt, kommt es beim Schmelzvorgang zu einer plötzlichen und wesentlich stärkeren Volumenänderung, die bei den meisten Metallen im Bereich von einigen Volumenprozenten liegt. Aluminum stellt in dieser Hinsicht mit seinem Volumenzuwachs von 7 % einen Sonderfall dar und ist daher zum Aufbau einer erfindungsgemäßen Kalibriervorrichtung besonders gut geeignet.

Erfindungsgemäß besonders günstig ist es, wenn das Gehäuse der Kalibriervorrichtung eine Druckfestigkeit besitzt, die größer als der Berstdruck für die Zerstörung der Oxidschicht des Schmelzelements beim Schmelzvorgang ist. Das Schmelzelement, das beispielweise aus Aluminium gebildet sein kann, erfährt beim Schmelzen eine Volumenvergrößerung. Aufgrund der Druckfestigkeit des Gehäuses erfolgt die Volumenvergrößerung zum Gegenkontakt hin, so dass dort der Druck ansteigt, bis er größer als die Oberflächenspannung der Oxidschicht ist. Die Oxidschicht reißt dann, so dass metallisches Aluminium freigelegt wird. Die Erfindung ist nicht auf die Verwendung von Aluminium und/oder Silber beschränkt. Vielmehr können anstelle dessen beliebige schmelzbare Metalllegierungen zum Einsatz gelangen, vorausgesetzt, ein präziser Schmelzpunkt liegt vor. Bei eutektischen Legierungen liegt ein präziser Schmelzpunkt vor, da bei derartigen Legierungen wir bei reinen Metallen die Solidus- und Liquidus-Temperaturen identisch sind.

Es gibt auch Metalle, beispielweise Antimon, bei denen beim Schmelzen eine negative Volumenänderung auftritt, ähnlich wie dies von der Anomalie des Wassers bekannt ist.

Auch derartige Metalle können im erfindungsgemäßen Sinne verwendet werden, da die erfindungsgemäße Vorrichtung sowohl bei ansteigender als auch bei sinkender Temperatur eingesetzt werden kann. In diesem Falle kommt es anstelle eines Kontaktgewinns zum Kontakverlust und umgekehrt.

Weitere Vorteile, Einzelheiten und Merkmale ergeben sich aus der nachfolgenden Beschreibung von fünf Ausführungsbeispielen der erfindungsgemäßen Vorrichtung. Es zeigen:
- Fig. 1a: eine Ausführungsform einer erfindungsgemäßen Kalibriervorrichtung, vor der Erreichung des Schmelzpunktes;
- Fig. 1b: die Kalibriervorrichtung gemäß Fig. 1a, jedoch während bzw. nach dem Schmelzprogramm;
- Fig. 2a und 2b: eine weitere Ausführungsform der erfindungsgemäßen Vorrichtung, in den Figuren 1a und 1b entsprechender Weise;
- Fig. 3, 4 und 5: je drei weitere Ausführungsformen der erfindungsgemäßen Vorrichtung, die speziell für die Herstellung einer industriell herstellbaren und industriell einsetzbaren Kalibriervorrichtung geeignet sind; und
- Fig. 6: die Kombination einer Ausführungsform der erfindungsgemäßen Vorrichtung mit einer an sich bekannten Temperatur-Kalibriervorrichtung, wobei bei dieser Ausführungsform zwei Temperaturen exakt geeicht werden können, zur Verwendung in einem erfindungsgemäßen Ofen für Dentalmaterial.

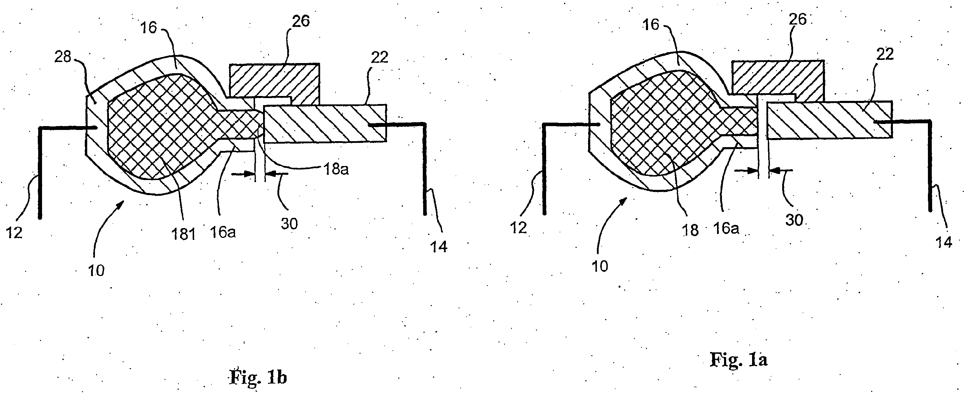

Fig. 1a zeigt zunächst eine erfindungsgemäße Kalibriervorrichtung 10, die zwei Anschlussdrähte 12 und 14 aufweist, welche Teil eines Stromkreises sind, in dem der Widerstand gemessen wird.

Ein Schmelzelement 18, das z.B. aus Reinaluminium mit definiertem Schmelzpunkt besteht, ist im Wesentlichen allseitig von einem Gehäuse 16 umschlossen. Dieses Gehäuse umschließt das Schmelzelement 18 totraumfrei. Es weist eine ausreichende Festigkeit, aber auch eine entsprechende chemische Stabilität auf, um dem mechanischen und chemischen Angriff des flüssig werdenden Schmelzelements zu widerstehen. In Fig. 1a ist das Gehäuse 16 bewusst asymmetrisch und unregelmäßig ausgebildet, wobei es sich versteht, dass die Form von Schmelzelement und Gehäuse für die vorliegende Erfindung ohne Belang sind. Durch die Bauchigkeit ergibt sich eine relativ große Volumenänderung am offenen Hals des Gehäuses, der im Bereich der Zone 16a ausgebildet ist.

Es versteht sich, dass das Gehäuse 16 anstelle der hier dargestellten, im Wesentlichen flaschenförmigen Ausgestaltung auch eine becherförmige Ausgestaltung haben kann. Das Gehäuse kann vorzugsweise aus Keramik oder aus Metall, insbesondere aus Stahl, bestehen. An der dem Hals oder Öffnungskanal 15 gegenüberliegenden Seite ist ein Boden 28 ausgebildet, an dem im Beispielsfall der Anschlussdraht 12 angebracht ist. Diese Lösung kommt in Betracht, wenn das Gehäuse 16 aus Metall besteht, das dann zugleich den elektrischen Kontakt zwischen dem Schmelzelement 18 und dem Anschlussdraht 12 herstellt.

Auch dann, wenn das Schmelzelement 18, wie in Fig. 1a und 1b dargestellt, eine unregelmäßige Form aufweist, kann ein einseitig dicht anliegendes Gehäuse durch Aufbringung einer Schicht mit einem geeigneten Beschichtungsvorgang erzeugt werden. Im Falle eines metallischen Gehäuses 16 kann dies z.B. durch einen galvanische Beschichtung mit Kupfer oder Chrom erfolgen. Es ist in diesem Zusammenhang wesentlich, dass der Schmelzpunkt des Gehäuses höher als der Schmelzpunkt des Schmelzelements 12 liegt.

Im Bereich einer Zone 16a formt das Gehäuse in dem hier dargestellten Ausführungsbeispiel den Hals aus und besitzt einen Öffnungskanal 15, durch welchen hindurch das Schmelzelement 18 beim Schmelzvorgang expandieren kann. Das Stahlgehäuse 16 hat also die Aufgabe, den beim Schmelzvorgang auftretenden Volumenzuwachs ausschließlich in Richtung der Öffnung der Zone 16a bzw. des dort gebildeten Kanals wirksam werden zu lassen.

Der Zone 16a des Gehäuses 16 gegenüberliegend und von dieser in einem Schaltabstand 30 beabstandet ist ein Gegenkontakt 22 angeordnet. Der Schaltabstand wird in der dargestellten Ausführungform durch eine Abstand gebende Halterung 26 festgelegt, die aus einem elektrisch nichtleitenden Material, insbesondere aus einer Keramik, besteht. Es versteht sich, dass bevorzugt auch der Schmelzpunkt der Halterung 26 höher als der Schmelzpunkt des Schmelzelements 18 ist. Die Form der Halterung 26 spielt für die erfindungsgemäße Lösung keine Rolle. Wie es in den Figuren 1a und 1b dargestellt ist, kann die Halterung einseitig ausgebildet sein, wobei es jedoch auch möglich ist, dass die Halterung nach der Art von mehreren Fingern ausgebildet ist oder nach der Art eines Rings die Öffnungszone 16a allseitig umschließt.

In Fig. 1b ist der Zustand des Schmelzelements 18 beim Erreichen des Schmelzpunkts dargestellt. Durch die Expansion beim Schmelzen wird ein Teil des Schmelzelements, das hier als Expansionsvolumen 18b dargestellt ist, über die Öffnung der Öffnungszone 16a herausgedrückt und bildet unter dem Einfluss der Oberflächenspannung der Schmelze einen Tropfen, der in Kontakt mit einer Stirnfläche des Gegenkontakts 22 gerät. Hierdurch kommt es zum Schließen des Schaltkreises. Die so sich einstellende Widerstandserniedrigung wird über die Anschlussdrähte 12 und 14 von der Erfassungsvorrichtung erfasst. Diese Widerstandsreduktion ist erfindungsgemäß gleichbedeutend mit der Erreichung der Kalibriertemperatur.

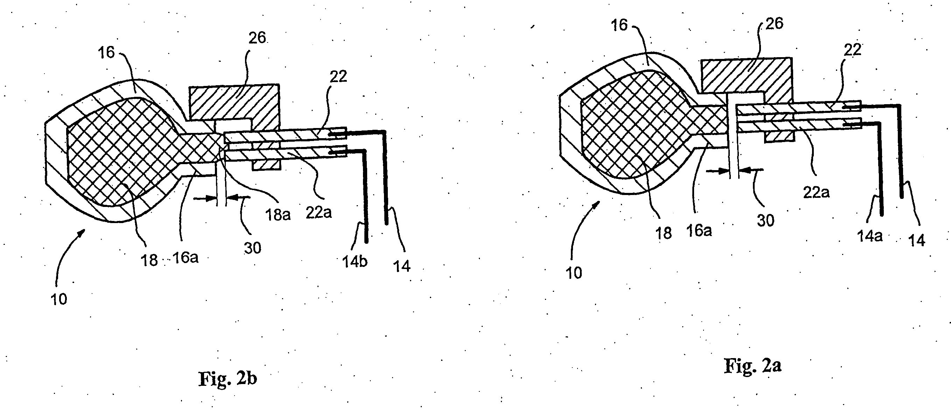

Eine modifizierte Ausführungsform ist in den Figuren 2a und 2b dargestellt, wobei hier wie auch in den weiteren Figuren gleiche Bezugszeichen auf gleiche Teile hinweisen. Neben dem Gegenkontakt 22 ist noch ein weiterer Gegenkontakt 22a ausgebildet. Beide Gegenkontakte sind parallel zueinander angeordnet. Diese Lösung hat den Vorteil, dass die Wärmedämmung für die Anschlussdrähte gemeinsam vorgenommen werden kann, so dass die thermischen Verluste geringer sind. Es versteht sich, dass anstelle dessen aber auch beliebige andere konstruktive Ausgestaltungen und Lösungen für die Verlegung der Anschlussdrähte und der entsprechenden Kontakte möglich sind. Beispielweise können die Gegenkontakte auch in angewinkelter Position, z.B. um 180° gegeneinander versetzt, angeordnet sein. Erfindungsgemäß ist es jedenfalls erforderlich, dass die Stirnflächen der beiden Gegenkontakte 22 und 22a ausreichend nahe an der Öffnung des Gehäuses 16 angeordnet sind, so dass es beim Expansionsvorgang zur Kontaktnahme beider Gegenkontakte 22 und 22a mit dem Schmelzelement 18 kommen kann.

Fig. 2b zeigt die Verhältnisse, nachdem die Kalibriervorrichtung gemäß Fig. 2a den Schmelzpunkt des Schmelzelements 18 erreicht hat. Das Expansionsvolumen 18b tritt aus der Öffnung der Öffnungszone 16a aus und stellt einen Kontakt zu den Gegenkontakten 22 und 22a und damit auch einen Kontakt zwischen diesen her. Beide Kontakte sind Teil des erfindungsgemäßen Stromkreises, dessen Widerstand auf diese Weise signifikant reduziert wird, so dass über eine Widerstandsmessung die erfindungsgemäße Erfassung der Kalibriertemperatur möglich ist.

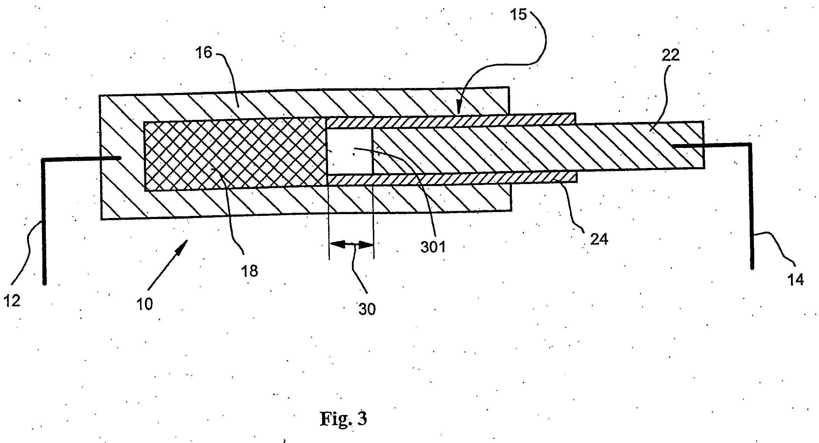

Fig. 3 zeigt eine weitere Ausführungsform der erfindungsgemäßen Kalibriervorrichtung, die sich bei Versuchen besonders bewährt hat. Das Gehäuse 16 ist bei dieser Ausführungsform als einseitig geschlossenes Metallrohr, z.B. aus Stahl, ausgebildet. In den Öffnungskanal oder die Bohrung 15 des Gehäuses 16 wird das Schmelzelement z.B. als eng eingepasster Zylinder aus Reinaluminium eingebracht. Durch die Einbringung unter deutlicher Reibung erfolgt ein Aufkratzen der am Umfang des Reinaluminiums bestehenden Oxidschicht, so dass eine sichere Kontaktgabe gegenüber dem umliegenden Gehäuse 16 möglich ist. Anschließend an das Schmelzelement 18 wird ein Keramikrohr 24 als elektrisch isolierende Trennschicht in die Bohrung an der Stirnseite des Schmelzelements 18 eingeschoben. In dieses Keramikrohr 24 wird der Gegenkontakt 22 so weit eingeschoben, dass an seiner Stirnseite ein Schaltabstand 30 gegenüber der Stirnseite des Schmelzelements 18 entsteht. Durch diese Anordnung entsteht ein Totvolumen 301, dessen Größe geringer als das beim Schmelzprozess zu erwartende Expansionsvolumen 18b ist.

Während bei den Ausführungsformen gemäß den Figuren 1 und 2 die Oberflächenspannung und deren Überwindung für die Kontaktnahme verantwortlich war, sorgt das Totvolumen 302 bei der Ausführungsform gemäß Fig. 3 dafür, dass es beim Schmelzvorgang zwangsweise zu einer Kontaktnahme kommt. Der Schaltabstand zwischen dem Schmelzelement 18 und dem Gegenkontakt 22 ist bei dieser Ausführungsform übrigens dadurch sichergestellt, dass der Gegenkontakt 22 in der gewünschten Position mit einem temperaturbeständigen Kitt mit dem Keramikkontakt 24 verbunden ist. Beim Schmelzen des Schmelzelements erfolgt eine intensive Volumenvergrößerung. Das Schmelzelement 18 kann hier lediglich in den Innenraum des Keramikrohrs 24 ausweichen. Die gesamte Volumenänderung führt dementsprechend zu einer intensiven Längenänderung in diesem Bereich, so dass eine abrupte Kontaktgabe zu dem Gegenkontakt 22 erfolgt.

Erfindungsgemäß führt auch eine weitere Volumenvergrößerung nicht dazu, dass das Gehäuse 16 gesprengt wird. Vielmehr ist bevorzugt, das Keramikrohr 24 so in dem Gehäuse 16 gelagert, dass sie bei entsprechender Kraftausübung verschoben wird.

In einer modifizierten Ausgestaltung ist das Gehäuse 16 im unteren Bereich ziemlich dünnwandig. Die Wandstärke ist so bemessen, dass beim Schmelzen eine sichere Kontaktgabe zum Gegenkontakt 22 hin erfolgt. Die Wand des Gehäuses 16 wirkt aber bei weiterer Erwärmung dann dort wie eine Art Feder, die die Kontaktierung beibehält, aber eine Ausdehnung der Hülse zur Kompensation des größeren Wärmeausdehnungskoeffizienten von Aluminium ermöglicht.

Es versteht sich, dass beliebige andere geeignete Maßnahmen ergriffen werden können, um den elektrischen Kontakt auch bei weiterer Erwärmung zu gewährleisten.

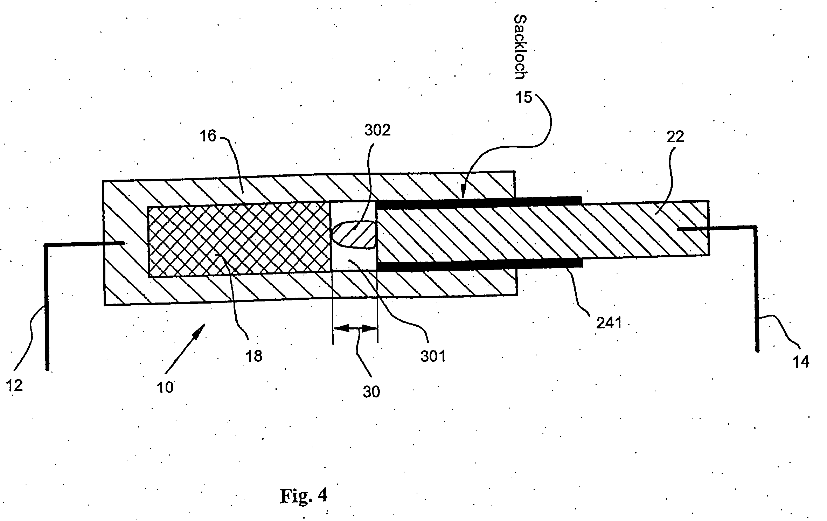

Eine weitere Ausführungsform der erfindungsgemäßen Kalibriervorrichtung ist in Fig. 4 dargestellt. Bei dieser Ausführungsform ist der Gegenkontakt 22 durch eine Keramikschicht 241 von dem Gehäuse 16 elektrisch isoliert. Die Keramikschicht 241 wurde erzeugt, indem ein 0,1 mm dicke Tonerdeschicht mittels Plasmaspritzen auf die Mantelfläche des Gegenkontakts 22 aufgebracht wurde. Um unter industriellen Bedingungen zu einer reproduzierbaren Einstellung des Schaltabstandes 30 zu kommen, sind vorab Distanz gebende Partikel 302 aus Keramik auf der Stirnfläche der Gegenelektrode 22 mit Keramikkitt befestigt. Hierdurch wird der Gegenkontakt 22 nach dem Einführen in die Bohrung 15 exakt positioniert und der Keramikkitt fixiert.

Die Einbringung der Distanz gebenden Partikel 302 hat den zusätzlichen Vorteil, dass das Totvolumen 301 noch weiter verkleinert wird.

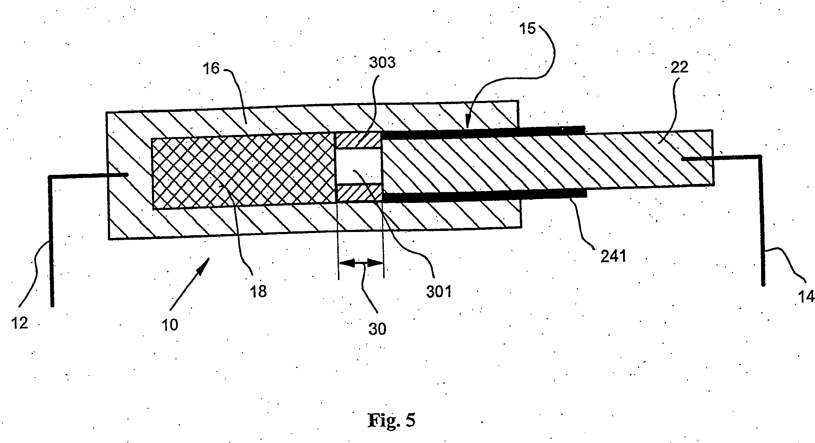

Eine ähnliche Ausführungsform ist in Fig. 5 dargestellt. Im Unterschied zu der Ausführungsform gemäß Fig. 4 wird anstelle der Distanz gebenden Partikel 302 ein Distanz gebendes Keramikrohr 303 verwendet.

Bei den Ausführungsformen gemäß den Figuren 1 bis 5 erfolgt der Temperaturkalibriervorgang mit ansteigender Temperatur. Wenn sichergestellt ist, dass es nicht zu einer Reaktion zwischen einem flüssigen Schmelzelement 18 und dem Gehäuse kommt, kann der Kalibriervorgang jedoch auch mit abfallender Temperatur erfolgen. Beim Erreichen der Erstarrungstemperatur des Schmelzelements kommt es dann zu einer plötzlichen Kontraktion, welche zum Kontaktverlust mit dem Gegenkontakt 22 führt. Dieser Vorgang des Kontaktverlusts wird besonders begünstigt, wenn für den Gegenkontakt ein Metall verwendet wird, das die Schmelze des flüssigen Schmelzelements 18 schlecht benetzt.

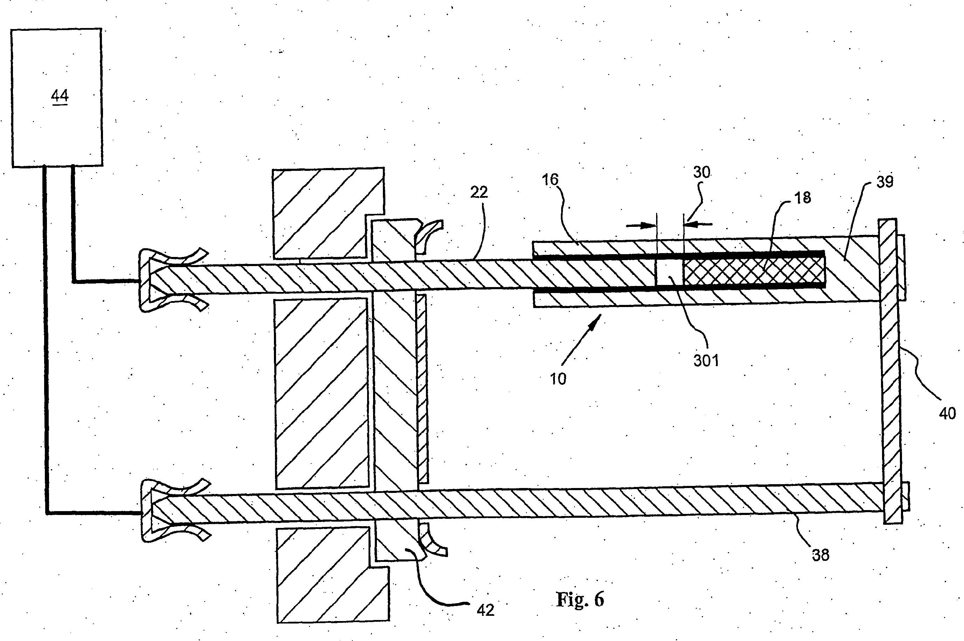

Fig. 6 zeigt eine Anordnung, bei der eine erfindungsgemäße Kalibriervorrichtung einer an sich bekannten Vorrichtung zur Schmelzkalibrierung in eleganter Weise kombiniert wurde, so dass bei einem Kalibriervorgang zeitlich kurz hintereinander zwei Kalibriertemperaturen kontrolliert werden können. Insofern wird auf die DE 100 08 603 A1 vollinhaltlich Bezug genommen.

Bei der Ausführungsform gemäß Fig. 6 ist der Gegenkontakt 22 der erfindungsgemäßen Kalibriervorrichtung zusammen mit der Elektrode 38 über eine elektrisch isolierende Halterung 42 fest verbunden. Der Gegenkontakt 22 und die Elektrode 38 werden durch zwei Löcher im Boden des Ofenraums eines Ofens in zwei Kontaktschuhe des Stromkreises eingeschoben. Die Kontaktschuhe sind mit der Erfassungsvorrichtung 44 verbunden, mit welcher der Widerstand des so gebildeten Stromkreises gemessen wird.

Der Gegenkontakt 22 ragt in einem Schaltabstand 301 in die Bohrung des Gehäuses 16 hinein. Die elektrische Isolationsschicht wurde bei dieser Ausführungsform auf der Innenseite der Bohrung 15 mit einer keramischen Schlichte erzeugt. Lediglich das endseitige Ende der Bohrung wurde freigelassen, damit der Schmelzkörper 18 elektrischen Kontakt zum Gehäuse 16 nehmen kann.

Der Boden oder das Endstück des Gehäuses bildet die Elektrode 39. Zwischen der Elektrode 39 und der Elektrode 38 wurde ein Schmelzdraht 40 fixiert. Wird dieser Draht aus Silber hergestellt und wird für das Schmelzelement 18 Reinaluminium gewählt, so ergibt sich beim Aufheizen der gesamten Anordnung der folgende Ablauf:
Bei tiefen Temperaturen ist der Kontakt der erfindungsgemäßen Vorrichtung nicht geschlossen, so dass der Schaltkreis offen ist, auch wenn der Silberdraht 40 geschlossen ist, nachdem er noch nicht geschmolzen ist. Wird nun die Temperatur des Ofens erhöht, so kommt es exakt bei 660°C zum Schmelzen des Schmelzelements 18 aus Aluminium und damit zur Kontaktnahme zum Gegenkontakt 22. Hierdurch wird der Schaltkreis geschlossen. Der Zeitpunkt des Widerstandsabfalls wird von der Kalibriervorrichtung als Eintreten der ersten Kalibriertemperatur von 660°C interpretiert.

Während der anschließenden weiteren Erwärmung über den Schmelzpunkt des Aluminiums hinaus bleibt der Kontakt durch das Schmelzelement 18 aufrecht erhalten. Das Flüssigaluminium expandiert noch leicht weiter, was unkritisch ist. Beim Erreichen der Schmelztemperatur des Silbers im Bereich von 960°C kommt es zum Durchschmelzen des Silberdrahts und damit zur erneuten Öffnung des Schaltkreises. Der Widerstand steigt steil an, was von der Erfassungsvorrichtung als Eintreten der zweiten Kalibriertemperatur interpretiert wird.

Eine derartige Eichung mit zwei exakt definierten Temperaturpunkten ist erfindungsgemäß besonders günstig, da in dieser Weise auch die Steigung eines Temperaturmessfühlers im Bereich zwischen den beiden Kalibriertemperaturen eindeutig festgelegt werden kann. Demgegenüber ist bei einer Einpunkt-Kalibrierung genau genommen nur der unmittelbare Bereich der Kalibriertemperatur geeicht.

## Patentansprüche

1. Kalibriervorrichtung für die Temperatur in einem Ofen, insbesondere einem Dentalofen, mit wenigstens einem metallischen Schmelzelement mit definiertem Schmelzpunkt, dessen Schmelzen von einer Erfassungsvorrichtung erfassbar ist, **dadurch gekennzeichnet, dass** das Schmelzelement in erstarrtem Zustand von einem Gegenkontakt (22, 22a) beabstandet ist und unter Einfluss der beim Schmelzvorgang auftretenden Volumenänderung mindestens ein Teil des Schmelzelements (18) sich zum Gegenkontakt (22, 22a) hin ausdehnt und dass das Schmelzelement (18) beim Erstarrungsvorgang den Kontakt verliert.

2. Kalibriervorrichtung nach Anspruch 1, dadurch gekenn zeichnet, dass das Schmelzelement (18) mit dem Gegenkontakt (22, 22a) in einem Schaltkreis verbunden ist, der Teil der Erfassungsvorrichtung ist.

3. Kalibriervorrichtung nach einem der Ansprüche 1 oder 2, **dadurch gekennzeichnet, dass** das Schmelzelement (18) in einem Gehäuse (16) mit dem Gegenkontakt (22, 22a) integriert ist und dass der Gegenkontakt (22, 22a) in erstarrtem Zustand des Schmelzelements einen Schaltabstand (30) aufweist.

4. Kalbriervorrichtung nach einem der vorhergehenden Ansprüche, **dadurch gekennzeichnet, dass** das Schmelzelement (18) und der Gegenkontakt (22, 22a) voneinander beabstandet angeordnet sind und der Gegenkontakt (22, 22a) von einer Isoliervorrichtung gehalten ist, die zugleich einen definierten Abstand zwischen dem Gegenkontakt (22, 22a) und dem Schmelzelement (18) in ungeschmolzenem Zustand festlegt.

5. Kalibriervorrichtung nach einem der vorhergehenden Ansprüche, **dadurch gekennzeichnet, dass** das Schmelzelement (18) und gegebenenfalls auch der oder die Gegenkontakte (22, 22a) in einem Gehäuse aus einem mindestens teilweise aus elektrische isolierendem Material bestehenden Gehäuse (16) aufgenommen sind.

6. Kalibriervorrichtung nach einem der vorhergehenden Ansprüche, **dadurch gekennzeichnet, dass** das Schmelzelement (18) in einem Gehäuse (16) aufgenommen ist, insbesondere an einem Boden (28) des Gehäuses, und der Gegenkontakt (22, 22a) dem Schmelzelement (18) gegenüberliegt.

7. Kalibriervorrichtung nach Anspruch 5, **dadurch gekennzeichnet, dass** das Gehäuse einen Öffnungskanal (15) aufweist und der Gegenkontakt (22, 22a) außerhalb des Öffnungskanals (15) angeordnet ist.

8. Kalibriervorrichtung nach Anspruch 5, **dadurch gekennzeichnet, dass** das Gehäuse (16) einen Öffnungskanal (15) aufweist, in dem der Gegenkontakt (22, 22a) angeordnet ist.

9. Kalibriervorrichtung nach einem der Ansprüche 7 oder 8, **dadurch gekennzeichnet, dass** mindestens zwei Gegenkontakte (22, 22a) vorgesehen sind, die elektrisch voneinander getrennt sind und außerhalb des Öffnungskanals (15) angeordnet sind oder in den Öffnungskanal (15) hineinragen.

10. Kalibriervorrichtung nach einem der vorhergehenden Ansprüche, **dadurch gekennzeichnet, dass** das Schmelzelement (18) das Gehäuse (16) ausgehend von einem Boden (28) teilweise ausfüllt und dass das Schmelzelement (18) direkt mit einem Anschlussdraht (12) des Schaltkreises in Verbindung steht, der in das Schmelzelement (18) hineinragt.

11. Kalibriervorrichtung nach einem der vorhergehenden Ansprüche, **dadurch gekennzeichnet, dass** das Gehäuse (16) mindestens teilweise elektrisch leitend ausgebildet ist und das Schmelzelement (18) in elektrischem Kontakt mit dem Gehäuse (16) steht und das Gehäuse (16) mit dem Schaltkreis verbunden ist.

12. Kalibriervorrichtung nach einem der vorhergehenden Ansprüche, **dadurch gekennzeichnet, dass** der Gegenkontakt (22) wenigstens teilweise mit einer elektrisch isolierenden Umhüllung oder Beschichtung versehen ist und insbesondere als Elektrode ausgebildet ist, welche Beschichtung (41) wenigstens teilweise auf der Mantelfläche des Gegenkontakts (22, 22a) und/oder wenigstens teilweise auf der Innenwand des Öffnungskanals aufgebracht ist.

13. Kalibriervorrichtung nach Anspruch 12, **dadurch gekennzeichnet, dass** der Gegenkontakt (22, 22a) in den Öffnungskanal (13) hineinragt und von einem insbesondere rohrförmigen Isolierelement (24), bevorzugt aus Keramik, gehalten ist.

14. Kalibriervorrichtung nach einem der Ansprüche 12 oder 13, **dadurch gekennzeichnet, dass** der Außendruchmesser des rohr förmigen Isolierelements (24) dem Innendurchmesser des Öffnungskanals (15) entspricht und dass das sich zwischen dem erstarrten Schmelzelement (18), dem Gegenkontakt (22, 22a) und gegebenen falls der Innenwand des Rohres erstreckende Volumen (Totvolumen 301) kleiner oder gleich dem Volumen ist, um welches sich das Schmelz element (18) beim Schmelzen ausdehnt.

15. Kalibriervorrichtung nach einem der vorhergehenden Ansprüche, **dadurch gekennzeichnet, dass** zwischen dem Schmelzelement (18) und dem Schließkontakt (22, 22a) wenigstens ein elektrisch isolierendes Distanzelement (303) angeordnet ist, dessen Innenvolumen kleiner ist als das sich zwischen dem Schmelzelement (18), dem Gegenkontakt (22, 22a) und der Wand des Gehäuses (16) erstreckenden Gesamtvolumen.

16. Kalibriervorrichtung nach Anspruch 15, **dadurch gekennzeichnet, dass** das Gesamtvolumen abzüglich des Volumens des Distanzelements (302, 303) kleiner/gleich dem Volumen ist, um welches sich das Schmelzelement (18) beim Schmelzen ausdehnen kann.

17. Kalibriervorrichtung nach einem der vorhergehenden Ansprüche, **dadurch gekennzeichnet, dass** das Gehäuse (16) oberhalb der Füllhöhe des ungeschmolzenen oder erstarrten Schmelzelements (18) einen den Innendurchmesser verringernden Schmelzhals (Rohr 24) aufweist.

18. Kalibriervorrichtung nach Anspruch 17, **dadurch gekennzeichnet, dass** das Rohr (24) aus Quarz oder Keramik ausgebildet ist und isolierend, aber temperaturfest ist.

19. Kalibriervorrichtung nach einem der Ansprüche 1 bis 18, **dadurch gekennzeichnet, dass** das Schmelzelement (18) aus Aluminium gebildet ist.

20. Kalibriervorrichtung nach einem der vorhergehenden Ansprüche, **dadurch gekennzeichnet, dass** die Erfassungsvorrichtung mit einer weiteren Kalibriervorrichtung elektrisch verbunden ist, die ein weiteres Schmelzelement (40) aufweist, das insbesondere einen höheren definierten Schmelzpunkt aufweist, als das Schmelzelement (18) der Kalibriervorrichtung.

21. Kalibriervorrichtung nach Anspruch 20, **dadurch gekennzeichnet, dass** das weitere, zweite Schmelzelement (40) aus einem Edelmetall, insbesondere Gold oder Silber, besteht.

22. Kalibriervorrichtung nach einem der Ansprüche 20 oder 21, **dadurch gekennzeichnet, dass** die erste, niedrigere Kalibriertemperatur durch das Schmelzen des ersten Schmelzelements (18) und eine zweite, höhere Kalibriertemperatur durch das Schmelzen des zweiten Schmelzelements von der Erfassungsvorrichtung erfassbar ist.

23. Kalibriervorrichtung nach einem der Ansprüche 20 bis 22, **dadurch gekennzeichnet, dass** beide Schmelzelemente zueinander in Reihe geschaltet sind und das erste Schmelzelement als Schließkontakt vorgesehen ist und das zweite Schmelzelement als Öffnungskontakt vorgesehen ist, so dass es beim Temperaturanstieg zunächst zu einem Schließen des Schaltkreises und bei einem weiteren Temperaturanstieg zu einer Öffnung des Schaltkreises kommt.

24. Ofen für Dentalmaterial, mit einer Kalibriervorrichtung, **dadurch gekennzeichnet, dass** die Kalibriervorrichtung die Merkmale eines oder mehrerer der Ansprüche 1 bis 22 aufweist.

## Claims

1. A calibration device for the temperature in a furnace, in particular a dental furnace, comprising at least one metallic melt element having a defined melting point, the melting of which being registerable by a registration device, **characterized in that** the melt element is spaced apart from an opposed contact (22, 22a) in a solid condition thereof and under the influence of the change in volume during the melt process at least a part of the melt element (18) extends towards the opposed contact (22, 22a) and **in that** the melt element (18) loses its contact during the solidification process.

2. The calibration device according to claim 1, **characterized in that** the melt element (18) and the opposed contact (22, 22a) are connected into a common switch circuit which forms part of the registration device.

3. The calibration device according to one of the claims 1 or 2, **characterized in that** the melt element (18) and the opposed contact (22, 22a) are integrated into a housing (16) and that the opposed contact (22, 22a) in the solid condition of the melt element, comprises a switch spacing (30).

4. The calibration device according to one of the preceding claims, **characterized in that** the melt element (18) and the opposed contact (22, 22a) are arranged to be spaced apart from one another and that the opposed contact (22, 22a) is supported by an insulation device which, at the same time, determines a defined distance between the opposed contact (22, 22a) and the melt element (18) in the unmelted state.

5. The calibration device according to one of the preceding claims, **characterized in that** the melt element (18) as well as possibly the one or more opposed contacts (22, 22a) are disposed in a housing (16) comprised at least partially of an electrically insulating material.

6. The calibration device according to one of the preceding claims, **characterized in that** the melt element (18) is disposed in a housing (16), in particular, on a base (28) of the housing, and the opposed contact (22, 22a) is disposed in opposition to the melt element (18).

7. The calibration device according to claim 5, **characterized in that** the housing comprises an opening channel (15) and the opposed contact (22, 22a) is disposed exteriorly of the opening channel (15).

8. The calibration device according to claim 5, **characterized in that** the housing (16) comprises an opening channel (15) in which the opposed contact (22, 22a) is disposed.

9. The calibration device according to one of the claims 7 or 8, **characterized in that** at least two opposed contacts (22, 22a) are provided which are electrically separated from one another and disposed exteriorly of the opening channel (15) or project into the opening channel (15).

10. The calibration device according to one of the preceding claims, **characterized in that** the melt element (18) extends from the base (28) to partially fill the housing (16), and that the melt element (18) is directly in contact with a connection wire (12) of the switch circuit, said connection wire projecting into the melt element (18).

11. The calibration device according to one of the preceding claims, **characterized in that** the housing (16) is configured with an at least martial electrically conducting configuration, and that the melt element (18) is in electrical contact with the housing (16), and the housing (16) is connected with the switch circuit.

12. The calibration device according to one of the preceding claims, **characterized in that** the opposed contact (22) is at least partially enclosed in an electrically insulating enclosure or layer and, in particular, is configured as an electrode, said layer (41) being at least partially formed on the sleeve surface of the opposed contact (22,22a) and/or at least partially on the inner wall of the opening channel.

13. The calibration device according to claim 12, **characterized in that** the opposed contact (22, 22a) projects into the opening channel (13) and is supported therein by a particularly tubular insulation element (24) formed, preferably, of ceramic.

14. The calibration device according to one of the claims 12 or 13, **characterized in that** the outer diameter of the tubular insulation element (24) corresponds to the interior diameter of the opening channel (15) and that the volume (dead volume 301) extending between the melt element (18) in its solid phase, the opposed contact (22, 22a) and possibly the internal wall of the tube is no greater than the volume into which the melt element (18) extends upon melting thereof.

15. The calibration device according to one of the preceding claims, **characterized in that** at least one electrically insulating distance element (303) is disposed between the melt element (18) and the closing contact (22, 22a), the distance element having an interior volume smaller than the total volume extending between the melt element (18), the opposed contact (22,22a) and the wall of the housing (16).

16. The calibration device according to claim 15, **characterized in that** the total volume, less the volume of the distance element (302, 303), is no greater than the volume into which the melt element (18) extends upon the melting thereof.

17. The calibration device according to one of the preceding claims, **characterized in that** the housing (16), in the portion thereof extending beyond the fill level of the melt element (18) in its unmelted or solid phase comprises a melt neck (tube 24) having a progressively decreasing internal diameter.

18. The calibration device according to claim 17, **characterized in that** the tube (24) is formed of quartz or ceramic and operates to provide electric insulation while, however, being temperature-stable.

19. The calibration device according to one of the claims 1 to 18, **characterized in that** the melt element (18) is formed of aluminum.

20. The calibration device according to one of the preceding claims, **characterized in that** the registration device is electrically connected with a further calibration device which comprises a further melt element (40) that has, in particular, a higher predetermined melting point than the melting point of the melt element (18) of the calibration device.

21. The calibration device according to claim 20, **characterized in that** the further, second melt element (40) is formed of a noble metal, in particular, gold or silver.

22. The calibration device according to one of the claims 20 or 21, **characterized in that** the melting of the first melt element (18) at a first, lower calibration temperature and the melting of the second melt element at a second, higher calibration temperature is registerable by the registration device.

23. The calibration device according to one of the claims 20 to 22, **characterized in that** the two melt elements are connected in series with one another and the first melt element operates as a closing contact and the second melt element operates as an opening contact, such that, during a rise in temperature, there is initially a closing of the switch circuit and, upon a further rise in temperature, there is an opening of the switch circuit.

24. A furnace for dental material, comprising a calibration device **characterized in that** the calibration device comprises the features of one or more of the claims 1 to 22.

## Revendications

1. Dispositif d'étalonnage pour la température à l'intérieur d'un four, en particulier un four dentaire, avec au moins un élément de fusion métallique avec un point de fusion défini, dont la fusion est déterminable par un dispositif de détection, **caractérisé en ce que** l'élément de fusion à l'état solidifié est distancé d'un contre-contact (22, 22 a) et, sous l'influence de la variation du volume qui se produit pendant le processus de fusion, au moins une partie de l'élément de fusion (18) s'étend vers le contre-contact (22, 22a) et que l'élément de fusion (18) perd le contact lors du processus de solidification.

2. Dispositif d'étalonnage selon la revendication 1, **caractérisé en ce que** l'élément de fusion (18) est relié au contre-contact (22, 22a) dans un circuit qui fait partie du dispositif de détection.

3. Dispositif d'étalonnage selon l'une des revendications 1 ou 2, **caractérisé en ce que** l'élément de fusion (18) est intégré dans un boîtier (16) avec le contre-contact (22, 22a) et que le contre-contact (22, 22a) présente une distance de commutation (30) à l'état solidifié de l'élément de fusion.

4. Dispositif selon l'une des revendications précédentes, **caractérisé en ce que** l'élément de fusion (18) et le contre-contact (22, 22a) sont disposés espacés l'un de l'autre et le contre-contact (22, 22a) est maintenu, par un dispositif d'isolation qui fixe en même temps une distance définie entre le contre-contact (22, 22a) et l'élément de fusion (18) à l'état non fondu.

5. Dispositif selon l'une des revendications précédentes, **caractérisé en ce que** l'élément de fusion (18) et le ou les contre-contacts (22, 22a), le cas échéant, sont accueillis dans un boitier fait au moins partiellement de matériau isolant électrique (16).

6. Dispositif d'étalonnage selon l'une des revendications précédentes, **caractérisé en ce que** l'élément de fusion (18) est accueilli dans un boîtier (15), en particulier sur un fond (28) du boîtier et le contre-contact (22, 22a)) se trouve en face de l'élément fusion (18.

7. Dispositif d'étalonnage selon la revendication 5, **caractérisé en ce que** le boîtier présente un canal d'ouverture (15) et le contre-contact (22, 22a) est disposé à l'extérieur du canal d'ouverture (15).

8. Dispositif d'étalonnage selon la revendication 5, **caractérisé en ce que** le boîtier présente un canal d'ouverture (15), dans lequel le contre-contact (22, 22a) est disposé.

9. Dispositif d'étalonnage selon l'une des revendications 7 ou 8, **caractérisé en ce qu'**au moins deux contre-contacts (22, 22a) sont prévus, qui sont séparés électriquement entre eux et sont disposés à l'extérieur du canal d'ouverture (15) ou qui font saillie dans le canal d'ouverture (15).

10. Dispositif d'étalonnage selon l'une des revendications précédentes, **caractérisé en ce que** l'élément de fusion (18) remplit partiellement le boîtier (16) à partir du fond (28) et que l'élément de fusion (18) rentre en contact direct avec un fil de raccordement (12) du circuit de connexion, qui fait saillie dans l'élément de fusion (18).

11. Dispositif de calibration selon l'une des revendications précédentes, **caractérisé en ce que** le boîtier (16) est au moins partiellement électriquement conducteur et que l'élément de fusion (18) est en contact électrique avec le boîtier (16) et le boîtier (16) est raccordé avec le circuit de connexion.

12. dispositif d'étalonnage selon l'une des revendications précédentes, **caractérisé en ce que** le contre-contact (22) est au moins partiellement recouvert d'une enveloppe ou d'un revêtement électriquement isolant et en particulier est formé comme électrode, dont le revêtement (41) est déposé au moins partiellement sur la surface extérieure du contre-contact (22, 22a) et/ou au moins partiellement sur la paroi interne du canal d'ouverture.

13. Dispositif d'étalonnage selon la revendication 12, **caractérisé en ce que** le contre-contact (22, 22a) s'étend dans le canal d'ouverture (13) et est maintenu en particulier par un élément isolant tubulaire (24), de préférence en céramique.

14. Dispositif d'étalonnage selon l'une des revendications de 12 ou 13, **caractérisé en ce que** le diamètre extérieur de l'élément isolant tubulaire (24) correspond au diamètre du canal d'ouverture (15) et que le volume (volume mort 301) qui s'étend entre l'élément de fusion (18) solidifié, le contre-contact (22, 22a) et, le cas échéant, la paroi interne du tube, est inférieur ou égal au volume par lequel l'élément de fusion (18) se dilate lors de la fusion.

15. Dispositif d'étalonnage selon l'une des revendication précédentes, **caractérisé en ce qu'**au moins un élément d'espacement électriquement isolant (303) est disposé entre l'élément de fusion (18) et le contact de fermeture (22, 22a), dont le volume intérieur est inférieur au volume total qui s'étend entre l'élément de fusion (18), le contre-contact (22, 22a) et la paroi du boîtier (16).

16. Dispositif d'étalonnage selon la revendication 15, **caractérisé en ce que** le volume total moins le volume de l'élément d'espacement (302, 303) est inférieur/égal au volume, par lequel l'élément de fusion (18) peut se dilater lors de la fusion.

17. Dispositif d'étalonnage selon l'une des revendications précédentes, **caractérisé en ce que** le boîtier (16) présente un col de fusion (tube 24) de réduction du diamètre intérieur au-dessus du niveau de remplissage de l'élément de fusion non fondu ou solidifié (18).

18. Dispositif d'étalonnage selon la revendication 17, **caractérisé en ce que** le tube (24) est formé en quartz ou en céramique et est isolant mais résistant à la température.

19. Dispositif d'étalonnage selon l'une des revendications 1 à 18, **caractérisé en ce que** l'élément de fusion est formé en aluminium (18).

20. Dispositif d'étalonnage selon l'une des revendications précédentes, **caractérisé en ce que** le dispositif de détection est relié électriquement avec un autre dispositif d'étalonnage, qui présente un autre élément de fusion (40) ayant notamment une température de fusion définie supérieure à celle de l'élément de fusion (18) de l'appareil d'étalonnage.

21. Dispositif d'étalonnage de la revendication 20, **caractérisé en ce que** le deuxième élément de fusion (40) est fait à partir d'un métal précieux, notamment de l'or ou de l'argent.

22. Dispositif d'étalonnage selon l'une des revendications 20 ou 21, **caractérisé en ce que** la première température d'étalonnage, plus faible, est détectable par l'élément de détection en raison de la fusion du premier élément de fusion (18) et qu'une deuxième température d'étalonnage, plus élevée, est détectable par l'élément de détection en raison de la fusion du deuxième élément de fusion.

23. Dispositif d'étalonnage selon l'une des revendications 20 à 22, **caractérisé en ce que** les deux éléments de fusion sont commutés en série l'un avec l'autre et que le premier élément de fusion est prévu comme un contact de fermeture et le deuxième élément de fusion est prévu comme un contact d'ouverture, et ainsi l'augmentation initiale de la température provoque une fermeture du circuit et une augmentation ultérieure de la température provoque une ouverture du circuit.

24. Four pour matériel dentaire avec un dispositif d'étalonnage, **caractérisé en ce que** le dispositif d'étalonnage possède les caractéristiques d'un ou plusieurs des revendications 1 à 22.
